# EUROPEAN PATENT APPLICATION

(11) **EP 1 953 355 A1**
(43) Date of publication of application: **06.08.2008**
(21) Application number: 07425041.6
(22) Date of filing: 26.01.2007
(51) Int. Cl.: F01N 3/021, F01N 3/022

(54) **Muffler filter**

(71) Applicant: Pianu, Virgilio, 09088 Simaxis OR (IT); Dore, Carlo, 00185 Roma (IT)
(72) Inventor: Pianu, Virgilio, 09088 Simaxis (OR) (IT)
(74) Representative: Iannone, Carlo Luigi

(57) **Abstract**

The present invention relates to a muffler (6) filter (1) characterised in that it comprises containment means (2) inside which it is contained a mixture of volcano lava, rock wool and triturated terracotta fragments.
Furthermore, it comprises a magnet or magnetic sheets and latch bolts to close the cover for easier mounting.

## Description

The present invention relates to a muffler filter.

More specifically the invention relates to a muffler filter suitable to reduce polluting emission of internal-combustion engines.

As it is well known, amount of gas discharge emitted by cars or gas oil heating systems is increasing in the large cities, and not only. This causes the increase of heavy dusts in the air.

Pollution deriving from internal combustion engines causes many health problems. It is in fact known that pollution tends to increase negative effects of many pathologies of the respiratory system, such as asthma.

Many solutions have been suggested in order to limit polluting emissions of internal combustion engines. One of these solutions is that providing the use of catalysers that however have a limited efficiency and are very expensive.

Said catalysers are efficient only if used for a long time on the means on which they are provided. It is in fact known that a catalyser cannot operate efficiently until a suitable operation temperature is reached. Therefore, a car provided with catalyser pollutes more than a car not having a catalyser in case it is used for a short period.

Electronic injection systems are presently available on the market, permitting optimisation of consumption and thus of polluting emissions. However, efficiency of these systems is rather limited, thus not concretely solving the above problem.

Filters are presently provided inside mufflers. Said filters permit depurating engine discharge gases.

Problems of these filters are mainly limited efficiency and short useful life. This requires their frequent replacement.

The object of the present invention is that of providing a filter to be put within mufflers, permitting zeroizing both gaseous and heavy dust emission of internal combustion engine discharge gas.

A second object of the present invention is that of providing a filter lasting for a long period.

A third object of the present invention is that of providing a filter not too much expensive.

It is therefore specific object of the present invention a muffler filter characterised in that it comprises containment means inside which it is contained a mixture of volcano lava, rock wool and triturated terracotta fragments.

Always according to the invention, volcano lava can be comprised in a percentage between 60% and 80%, preferably 70%, rock wool can be comprised in a percentage between 15% and 25%, preferably 20%, and triturated terracotta fragments are comprised in a percentage between 5% and 15%, preferably 10%.

Still according to the invention, said containment means can be comprised of a metal net, comprising fixing means for closing the same net.

Furthermore, according to the invention, said filter can comprise a magnet and/or a magnetic sheet.

Always according to the invention, said muffler can comprise a cover, permitting introduction and withdrawal of said filter.

Still according to the invention, said cover can comprise closure means such as latch bolts.

Advantageously, according to the invention, said muffler can comprise a curved outlet duct suitable to send exit discharge gases directly on the road.

Furthermore, according to the invention, said outlet duct can be comprised of two hinged portions.

Preferably, according to the invention, said two portions can be coupled by return means, such as a spring, in order to keep them coupled.

The present invention will be now described, for illustrative but not limitative purposes, according to its preferred embodiments, with particular reference to the figures of the enclosed drawings, wherein:
figure 1 shows a first perspective view of muffler filter according to the present invention;
figure 2 shows a second perspective view of the muffler filter according to figure 1;
figure 3 shows a muffler with a filter according to the present invention;
figure 4 shows the muffler of figure 3 without the cover; and
figure 5 shows an embodiment of the outlet duct of muffler of figure 3.

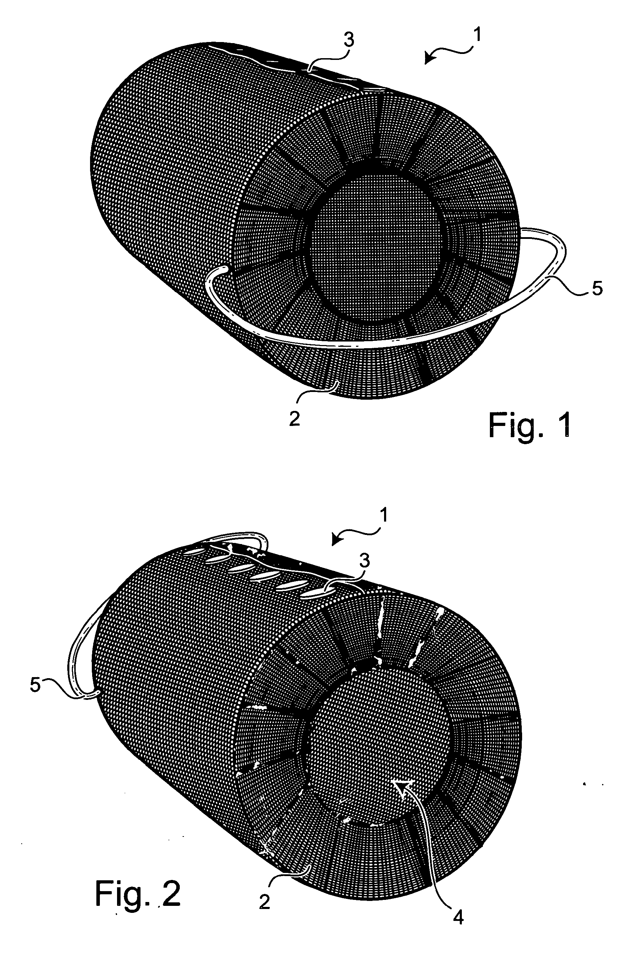

Making reference to figures 1 and 2 it is possible observing muffler filter 1. said filter 1 is comprised of a net 2 having fixing means 3. Said net 2 is suitable to contain a mixture comprising 70% of volcano lava, 20% of rock wool and 10% of triturated terracotta fragments.

Said net 2 and said mixture realise a body that, in the present embodiment, has a cylindrical shape. Obviously, shape of filter 1 body can be different, permitting its conformation to the different geometries of the existing mufflers.

At the rear, filter 1 provides a cavity 4. Said cavity receives a part of a duct for exit of discharge gases, preventing gas leakages.

Car filter 1 according to the invention weights about 3.7 kg. Filter 1 with suitable dimensions and shape can be adopted for cars, trucks, motorcycles and any other means providing two or four stroke internal combustion engine.

Said filter 1 has a handle 5 on one end, to permit its carrying and easing its withdrawal from the muffler 1 within which it is inserted.

Filter 1, if applied to a car, can last for about 10000 km.

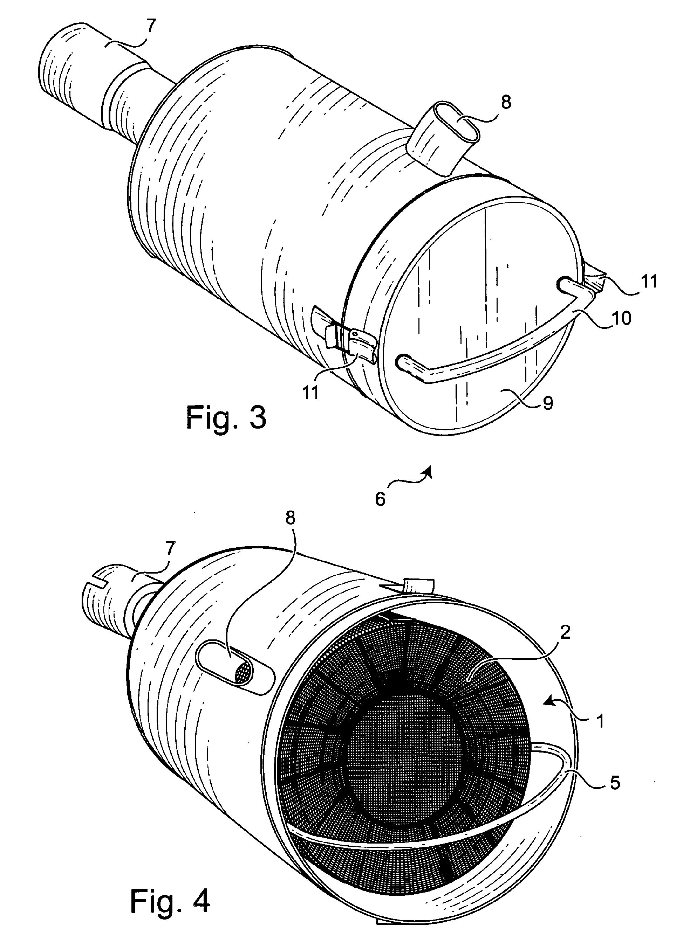

Figure 3 shows a muffler 6 for introduction of filter 1. Said muffler 6 provides duct 7 for inlet of discharge gases, and duct 8 for outlet of discharge gases, said duct 8 preferably having an ovoidal shape.

Muffler 6 has a cover 9, provided with a handle 10. Said cover 9 is fixed to the body of said muffler 6 by a pair of latch bolts 11.

Introduction of filter 1 within muffler body 6 is shown in figure 4, after removal of latch bolts 11 and of cover 9.

Within cavity of muffler 6 wherein the filter is positioned, it is possible also providing a magnet and/or a magnetic sheet (not shown in the figure), said sheet having preferably a thickness of 1 mm. They can be coupled to or separated from the same filter 1.

Said and/or magnetic sheet permits attracting possible microscopic metallic parts that could be present in the car discharge gases, thus permitting an even more efficient purification.

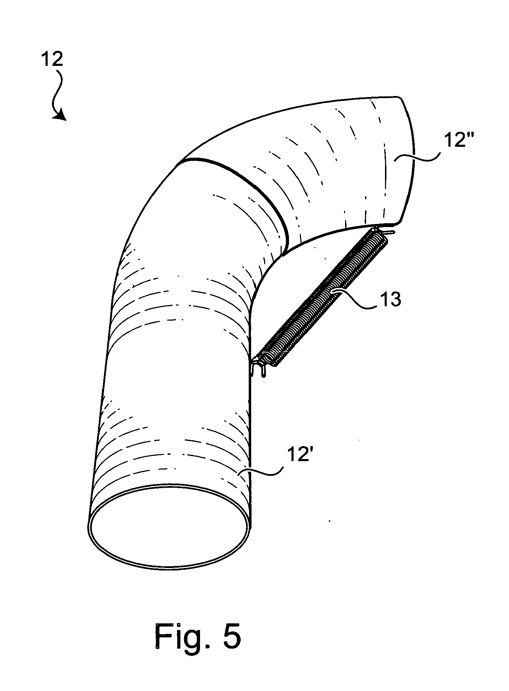

An additional outlet duct 12 to be applied to the muffler 6 is shown in figure 5. Said duct is curved and permits channelling the gases toward the road surface.

Duct 12, in the embodiment shown in the figure, is comprised of two portions 12' and 12". Portion 12" is hinged on portion 12' and it is coupled with the same by a spring 13. Said spring 13 permits lifting portion 12" for removal of possible incrustations.

On the basis of the above specification, it can be observed that basic feature of the present invention is the fact that the filter permits filtering gases and heavy dusts.

An advantage of the present invention is that said filter can be implemented in the existing mufflers.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Muffler filter **characterised in that** it comprises containment means inside which it is contained a mixture of volcano lava, rock wool and triturated terracotta fragments.

2. Filter according to claim 1, **characterised in that** volcano lava is comprised in a percentage between 60% and 80%, preferably 70%.

3. Filter according to one of the preceding claims, **characterised in that** rock wool is comprised in a percentage between 15% and 25%, preferably 20%.

4. Filter according to one of the preceding claims, **characterised in that** triturated terracotta fragments are comprised in a percentage between 5% and 15%, preferably 10%.

5. Filter according to one of the preceding claims, **characterised in that** said containment means are comprised of a metal net.

6. Filter according to claim 5, **characterised in that** said metal net comprises fixing means for closing the same net.

7. Filter according to one of the preceding claims, **characterised in that** said filter comprises a magnet and/or a magnetic sheet.

8. Filter according to one of the preceding claims, **characterised in that** said muffler comprises a cover, permitting introduction and withdrawal of said filter.

9. Filter according to one of the preceding claims, **characterised in that** said cover comprises closure means such as latch bolts.

10. Filter according to one of the preceding claims, **characterised in that** said muffler comprises a curved outlet duct suitable to send exit discharge gases directly on the road surface.

11. Filter according to claim 10, **characterised in that** said outlet duct is comprised of two hinged portions.

12. Filter according to claim 11, **characterised in that** said two portions are coupled by return means, such as a spring, in order to keep them coupled.
